(19) Europäisches Patentamt
European Patent Office
Office européen des brevets

(11) EP 4 603 896 A1

(12) EUROPEAN PATENT APPLICATION

(43) Date of publication:
20.08.2025 Bulletin 2025/34

(21) Application number: 24203497.3

(22) Date of filing: 30.09.2024

(51) International Patent Classification (IPC):
G02F 1/035 (2006.01)    G02F 1/225 (2006.01)

(52) Cooperative Patent Classification (CPC):
G02F 1/035; G02F 1/0356; G02F 1/2255

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 16.02.2024 JP 2024022427

(71) Applicant: Sumitomo Osaka Cement Co., Ltd.
Tokyo, 105-8641 (JP)

(72) Inventors:
• SUGAMATA, Toru
Tokyo, 105-8641 (JP)
• MIYAZAKI, Norikazu
Tokyo, 105-8641 (JP)

(74) Representative: Weickmann & Weickmann
PartmbB
Postfach 860 820
81635 München (DE)

(54) **OPTICAL MODULATION DEVICE, OPTICAL MODULATOR, OPTICAL MODULATION MODULE, OPTICAL TRANSMISSION APPARATUS, AND OPTICAL TRANSMISSION SYSTEM**

(57)    An optical modulation device includes a substrate including a multilayer portion, an optical waveguide layer on which an optical waveguide is formed in the multilayer portion, and a modulation electrode formed to be divided into a plurality of segments along a propagation direction of the optical waveguide to control a light wave propagating through the optical waveguide, in which in all sections of the electrode or a section excluding a part of the sections, a clearance, measured in an extending direction of the optical waveguide, between gaps between adjacent segments is constant, the multilayer portion includes the optical waveguide layer, a first support layer, and a second support layer, and a refractive index n0 of the optical waveguide layer, a refractive index n1 of the first support layer, and a refractive index n2 of the second support layer have a relationship of n0 > n1 and n2 > n1.

FIG. 5

CROSS-SECTIONAL VIEW TAKEN ALONG LINE V-V

EP 4 603 896 A1

**Description**

BACKGROUND OF THE INVENTION

Field of the Invention

The present invention relates to an optical modulation device, an optical modulator, an optical modulation module, an optical transmission apparatus, and an optical transmission system.

Description of Related Art

In a high-frequency/high-capacity optical fiber communication system, an optical modulator incorporating an optical modulation device as an optical waveguide device including an optical waveguide formed on a semiconductor substrate of InP or the like or on a substrate of $LiNbO_3$ (hereinafter, referred to as LN) or the like having an electro-optic effect, and a control electrode for controlling a light wave propagating through the optical waveguide has been widely used.

Particularly, the optical modulation device using the LN substrate may implement optical modulation characteristics of a small optical loss and a wide bandwidth and thus, has been widely used in the high-frequency/high-capacity optical fiber communication system.

In recent years, in order to implement further low-voltage driving and high-frequency modulation while reducing a size of the optical modulator, an optical modulator using a rib optical waveguide or a ridge optical waveguide (hereinafter collectively referred to as a protruding optical waveguide) configured by forming a strip-shaped protruding portion on a surface of an LN substrate formed as a thin film (or a thin plate) (for example, having a thickness of 20 $\mu$m or lower) to further strengthen interaction between a signal electric field and guided light in the substrate has also been used in practice.

In addition, in recent years, it has been suggested to use a so-called segmented electrode in which an electrode is divided into a plurality of segments along an optical propagation direction of the optical waveguide as a coplanar modulation electrode, in order to achieve impedance matching between the modulation electrode and a drive circuit and velocity matching between a high-frequency propagation velocity in the modulation electrode and an optical propagation velocity in the optical waveguide (Japanese Laid-open Patent Publication No. 2022-148652, Japanese Laid-open Patent Publication No. 2016-194544, and Japanese Laid-open Patent Publication No. 2020-181173).

SUMMARY OF THE INVENTION

The inventors of the present invention have found that in the protruding optical waveguide provided with the segmented electrode as the modulation electrode, forming the protruding portion (that is, a rib or a ridge) constituting the optical waveguide with high accuracy in a wafer process still poses an issue of variation in optical characteristics such as a modulation extinction ratio. A factor or a solution of the issue has not been found for a long time.

An object of the present invention is to implement favorable optical characteristics in an optical modulation device using a protruding optical waveguide and a segmented electrode as a modulation electrode.

According to an aspect of the present invention, there is provided an optical modulation device including a substrate including a multilayer portion configured with multiple layers, an optical waveguide layer on which an optical waveguide is formed in the multilayer portion of the substrate, and a modulation electrode that is an electrode formed on the optical waveguide layer to control a light wave propagating through the optical waveguide and that is formed to be divided into a plurality of segments along a propagation direction of light of the optical waveguide, in which in all sections of the electrode or a section excluding a part of the sections of the electrode, a clearance L, measured in an extending direction of the optical waveguide, between gaps between adjacent segments is constant, the multilayer portion of the substrate includes the optical waveguide layer, a first support layer in contact with a lower surface of the optical waveguide layer, and a second support layer in contact with a lower surface of the first support layer, and a refractive index n0 of the optical waveguide layer, a refractive index n1 of the first support layer, and a refractive index n2 of the second support layer have a relationship of n0 > n1 and n2 > n1.

According to another aspect of the present invention, with respect to a wavelength $\lambda$ of the light wave propagating through the optical waveguide and the refractive index n1 of the first support layer, the clearance L may have a relationship of L > 4 $\times$ $\lambda$/n1.

According to another aspect of the present invention, with respect to a wavelength $\lambda$ of the light wave propagating through the optical waveguide and the refractive index n1 of the first support layer, a thickness t1 of the first support layer may have a relationship of t1 < 10 $\times$ $\lambda$/n1.

According to another aspect of the present invention, the multilayer portion of the substrate may further include a third support layer in contact with a lower surface of the second support layer, and the refractive index n0 of the optical waveguide layer, the refractive index n1 of the first support layer, the refractive index n2 of the second support layer, and a refractive index n3 of the third support layer may have a relationship of n0 > n1 and n3 > n2 > n1.

According to another aspect of the present invention, a light absorbing material that absorbs light in a wavelength range of the light wave propagating through the optical waveguide may be disposed on the back surface of the substrate facing the surface of the optical waveguide layer.

According to another aspect of the present invention, the light absorbing material may be a carbon material, a black resin, or a metal filler.

According to another aspect of the present invention, the substrate may be formed by laminating a plurality of plate bodies, and each plate body may include one layer or a plurality of layers of any number among the optical waveguide layer and a plurality of support layers including the first support layer and the second support layer.

According to another aspect of the present invention, there is provided an optical modulator including any of the optical modulation devices, a case for accommodating the optical modulation device, an optical fiber for inputting light into the optical modulation device, and an optical fiber for guiding light output from the optical modulation device to an outside of the case.

According to another aspect of the present invention, there is provided an optical modulation module including any of the optical modulation devices, a case for accommodating the optical modulation device, an optical fiber for inputting light into the optical modulation device, an optical fiber for guiding light output from the optical modulation device to an outside of the case and a drive circuit for driving the optical modulation device.

According to another aspect of the present invention, there is provided an optical transmission apparatus including the optical modulator or the optical modulation module, and an electronic circuit for generating an electrical signal for causing the optical modulation device to perform a modulation operation.

According to another aspect of the present invention, there is provided an optical transmission system including the optical transmission apparatus, and an optical fiber transmission channel through which output light of the optical modulation device is transmitted.

According to the present invention, favorable optical characteristics can be implemented in an optical modulation device using a protruding optical waveguide and a segmented electrode as a modulation electrode.

BRIEF DESCRIPTION OF THE DRAWINGS

FIG. 1 is a diagram illustrating a configuration of an optical modulator using an optical modulation device according to a first embodiment of the present invention.
FIG. 2 is a plan view of the optical modulation device according to the first embodiment.
FIG. 3 is a side view of the optical modulation device illustrated in FIG. 2.
FIG. 4 is a diagram illustrating a configuration of a modulation portion of the optical modulation device illustrated in FIG. 2.
FIG. 5 is a cross-sectional view taken along line V-V of the modulation portion illustrated in FIG. 4.
FIG. 6 is a side view of an optical modulation device according to a second embodiment.
FIG. 7 is a cross-sectional view of a modulation portion of the optical modulation device according to the second embodiment.
FIG. 8 is a side view of an optical modulation device according to a third embodiment.
FIG. 9 is a cross-sectional view of a modulation portion of the optical modulation device according to the third embodiment.
FIG. 10 is a diagram illustrating a configuration of an optical modulation module according to a fourth embodiment.
FIG. 11 is a diagram illustrating a configuration of an optical transmission apparatus according to a fifth embodiment.
FIG. 12 is a diagram illustrating a configuration of an optical transmission system according to a sixth embodiment.
FIG. 13 is a plan view illustrating an example of an optical modulation device of the prior art.
FIG. 14 is a cross-sectional view taken along line XIV-XIV of the optical modulation device of the prior art illustrated in FIG. 13.
FIG. 15 is a cross-sectional view taken along line XV-XV of the optical modulation device of the prior art illustrated in FIG. 13.

DETAILED DESCRIPTION OF THE INVENTION

The inventors of the present invention have intensively studied variation in optical characteristics of a protruding optical waveguide provided with a segmented electrode as a modulation electrode, and have found that a factor of the variation is interference of a leaked light beam generated from the protruding optical waveguide at a position of each gap portion between segments (each portion of the electrode divided at constant clearances) constituting the segmented electrode.

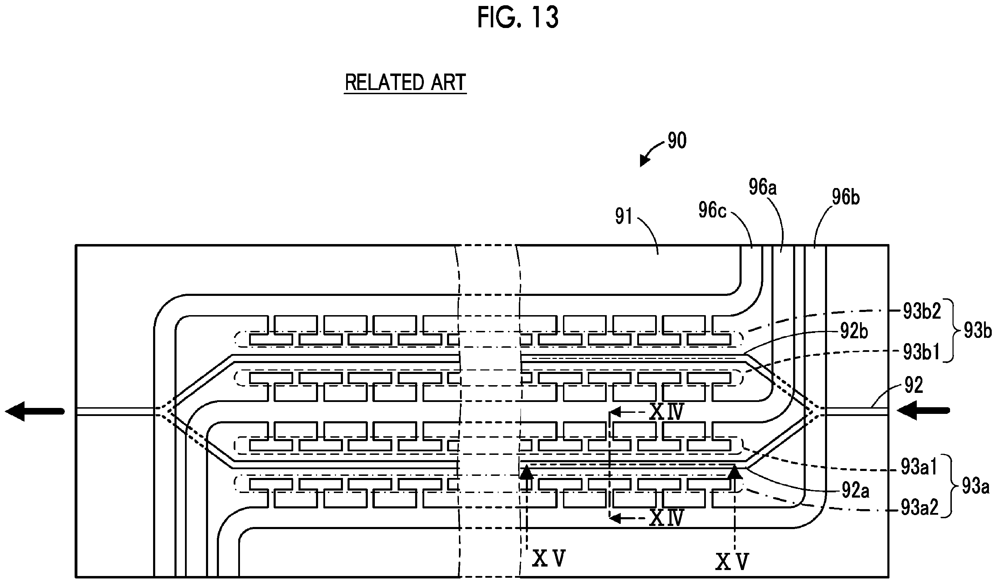

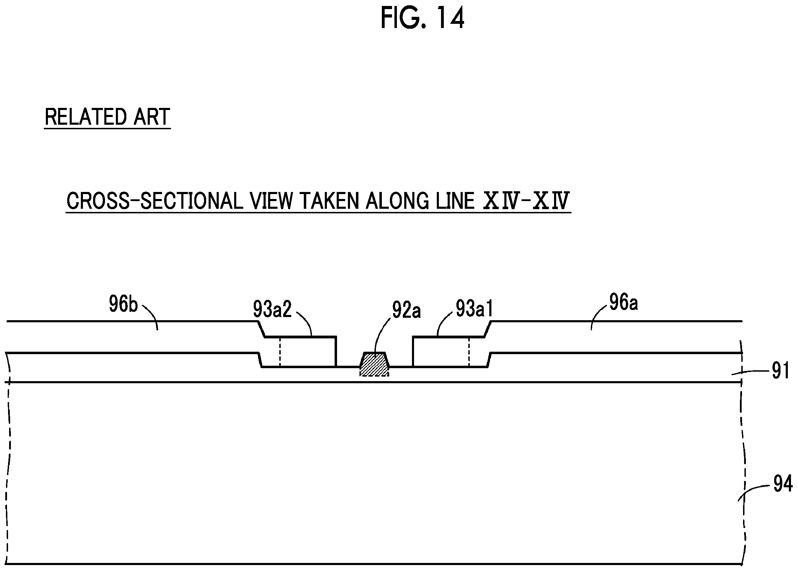

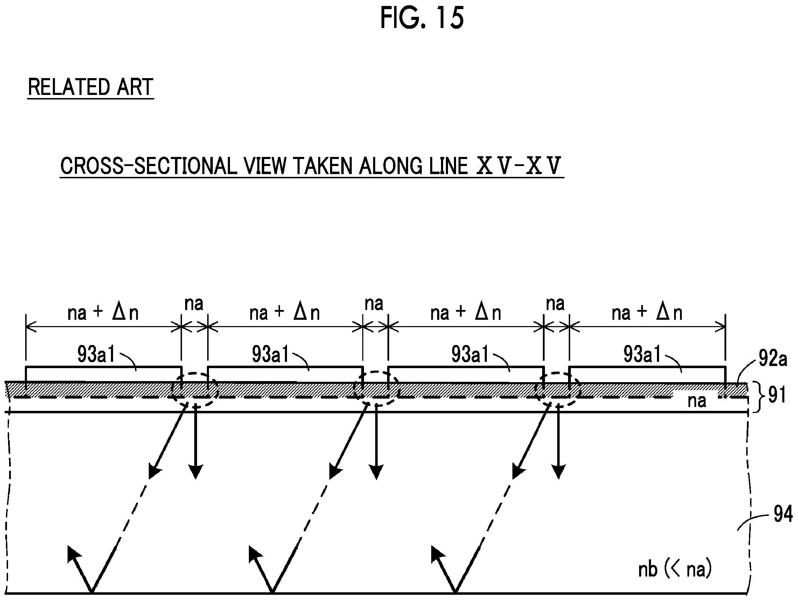

FIGS. 13, 14, and 15 are descriptive diagrams for describing the factor of the variation in the optical characteristics in an optical modulation device of the prior art. FIG. 13 is a plan view of an optical modulation device including a protruding optical waveguide provided with a segmented electrode as a modulation electrode, and FIG. 14 is a cross-sectional view taken along line XIV-XIV of the optical modulation device illustrated in FIG. 13. FIG. 15 is a cross-sectional view taken along line XV-XV in the optical modulation device illustrated in FIG. 13.

With reference to FIGS. 13, 14, and 15, an optical modulation device 90 of the prior art illustrated as an example includes a Mach-Zehnder type optical waveguide 92 that is formed on one principal surface (upper surface) of an optical substrate 91 which is an LN substrate having a thickness of several $\mu$m to several tens of $\mu$m and that includes a protruding optical waveguide, and modulation electrodes 93a and 93b for controlling a light wave propagating through each of two arm waveguides 92a and 92b of the Mach-Zehnder type optical waveguide 92. Another principal surface (lower surface) of the optical substrate 91 is bonded to a support substrate 94 (refer to FIGS. 14 and 15). For example, the support substrate 94 is generally a glass plate having a lower refractive index than the optical substrate 91.

The modulation electrode 93a includes a hot electrode 93a1 and a ground electrode 93a2 that face each other with the arm waveguide 92a interposed therebetween in the principal surface of the optical substrate 91. Similarly, the modulation electrode 93b has a hot electrode 93b1 and a ground electrode 93b2 that face each other with the arm waveguide 92b interposed therebetween in the principal surface of the optical substrate 91.

Each of the modulation electrodes 93a and 93b is configured as a segmented electrode divided into a plurality of portions along optical propagation directions of the arm waveguides 92a and 92b. Specifically, each of the hot electrode 93a1 and the ground electrode 93a2 constituting the modulation electrode 93a is divided into a plurality of portions (segments) having the same length along the optical propagation direction of the arm waveguide 92a. Each of the hot electrode 93b1 and the ground electrode 93b2 constituting the modulation electrode 93b is also divided into a plurality of segments having the same length along the optical propagation direction of the arm waveguide 92b, and gaps between the segments are configured to be arranged at constant clearances.

Each segment of the hot electrodes 93a1 and 93b1 is electrically connected to each other by a hot transmission channel 96a. In addition, each segment of the ground electrode 93a2 is electrically connected to each other by a ground transmission channel 96b, and each segment of the ground electrode 93b2 is electrically connected to each other by a ground transmission channel 96c. Accordingly, the hot electrodes 93a1 and 93b1 connected to each other by the hot transmission channel 96a, the ground electrode 93a2 connected to the ground transmission channel 96b, and the ground electrode 93b2 connected to the ground transmission channel 96c constitute a coplanar electrode as a whole.

As illustrated in the cross-sectional view taken along line XV-XV in FIG. 15, in the arm waveguide 92a, in a case where a high-frequency signal is transmitted to the modulation electrode 93a, for example, an electric field is applied to the arm waveguide 92a in a portion in which the segments of the hot electrode 93a1 and the segments of the ground electrode 93a2 face each other. Accordingly, a refractive index changes (for example, increases) by $\Delta$n from a refractive index na (substrate refractive index na) of the optical substrate 91. In gap portions in which the segments do not face each other, an electric field is not applied to the arm waveguide 92a. Thus, the refractive index remains as the substrate refractive index na.

Each of portions of the unchanging refractive index that are arranged along the arm waveguide 92a and that occur at positions of the gap portions in which the segments of the modulation electrode 93a do not face each other has a point of discontinuity of the refractive index (disturbance in a change in the refractive index) of the arm waveguide 92a along the optical propagation direction, and is a factor that causes leaked lights beam from the arm waveguide 92a.

Leaked light beams generated from each of the portions of the unchanging refractive index arranged along the arm waveguide 92a leak to the support substrate 94 having a refractive index nb lower than that of the optical substrate 91 and are repeatedly reflected between the principal surfaces of the support substrate 94 to be intensified while interfering with each other in the support substrate 94 and propagate in a left-right direction of the illustration.

Particularly, each segmented electrode as the modulation electrode 93a is generally divided into several hundred to several thousand segments. Thus, the number of gaps between the segments is also several hundreds to several thousands. Consequently, in the arm waveguide 92a, the number of leaked light beams generated from each gap arranged at equal clearances between the segments is several hundreds to several thousands, and these leaked light beams interfere with each other to be intensified in the support substrate 94. Accordingly, leaked light beams having considerable intensity may be generated in the support substrate 94.

The above phenomenon also occurs in the arm waveguide 92b in which the modulation electrode 93b is formed, and leaked light beams from the arm waveguide 92b interfere with each other to be intensified in the support substrate 94. Accordingly, the leaked light beams having considerable intensity are further increased in the support substrate 94.

A part of the high-intensity leaked light beams generated by the interference may enter a part of the Mach-Zehnder type optical waveguide 92 other than the arm waveguides 92a and 92b to be coupled with signal light (or modulated light) propagating through the Mach-Zehnder type optical waveguide 92. Such leaked light beams coupled with the signal light (or the modulated light) propagating through the Mach-Zehnder type optical waveguide 92 are noise light and deteriorate the optical characteristics such as an extinction ratio of an optical modulation operation in the Mach-Zehnder type optical waveguide 92, thereby causing the variation in the optical characteristics.

The present invention is conceived based on the knowledge about the factor of the variation in the optical characteristics and particularly, reduces the variation in the optical characteristics in the optical modulation operation by suppressing the interference between the leaked light beams in the support substrate to suppress an increase in the intensity of the leaked light beams caused by the interference.

Hereinafter, embodiments of the present invention will be described with reference to the drawings.

1. First Embodiment

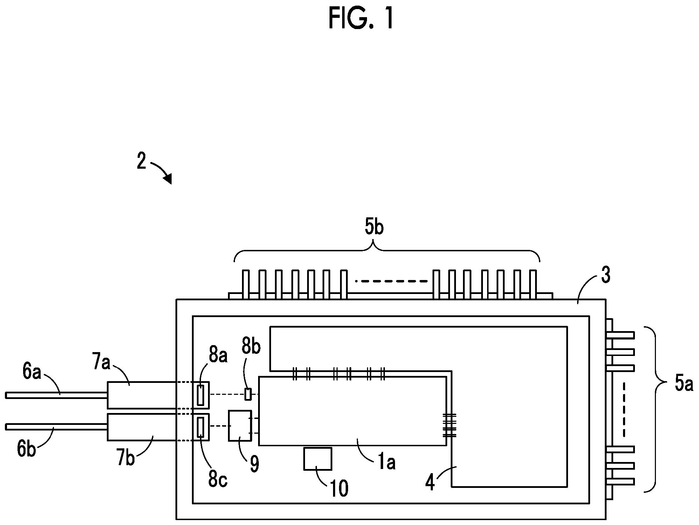

First, a first embodiment of the present invention will be described. FIG. 1 is a diagram illustrating a configuration of an optical modulator 2 using an optical modulation device 1a according to the first embodiment of the present invention. The optical modulator 2 includes the optical modulation device 1a and a relay substrate 4 in a case 3. For example, the optical modulation device 1a has a DPQPSK modulator configuration. The case 3 is finally sealed airtight by fixing a cover (not illustrated) that is a plate body to an opening portion of the case 3.

The optical modulator 2 also includes a signal pin 5a for inputting a high-frequency electrical signal used for modulation of the optical modulation device 1a, and a signal pin 5b for inputting an electrical signal used for adjustment or the like of an operating point of the optical modulation device 1a.

The optical modulator 2 further includes an input optical fiber 6a for inputting light into the case 3 and an output optical fiber 6b for guiding light modulated by the optical modulation device 1a to an outside of the case 3, on the same surface of the case 3.

The input optical fiber 6a and the output optical fiber 6b are fixed to the case 3 through supports 7a and 7b, respectively, which are fixing members. The light input from the input optical fiber 6a is collimated by a lens 8a disposed in the support 7a and is then input into the optical modulation device 1a through a lens 8b. However, this is only an example, and light may be input into the optical modulation device 1a by, for example, introducing the input optical fiber 6a into the case 3 through the support 7a and connecting an end surface of the introduced input optical fiber 6a to an end surface of a substrate 20a (described later) of the optical modulation device 1a, in accordance with the prior art.

The optical modulator 2 also includes an optical unit 9 that polarizes and combines two modulated light beams output from the optical modulation device 1a. The light beam output from the optical unit 9 after being polarized and combined is condensed by a lens 8c disposed in the support 7b and is coupled to the output optical fiber 6b.

The relay substrate 4 relays the high-frequency electrical signal input from the signal pin 5a and the electrical signal for adjustment or the like of the operating point input from the signal pin 5b to the optical modulation device 1a based on a conductor pattern (not illustrated) formed on the relay substrate 4. For example, the conductor pattern on the relay substrate 4 is connected to each of the electrodes of the optical modulation device 1a by wire bonding. The optical modulator 2 also includes a terminator 10 having predetermined impedance in the case 3.

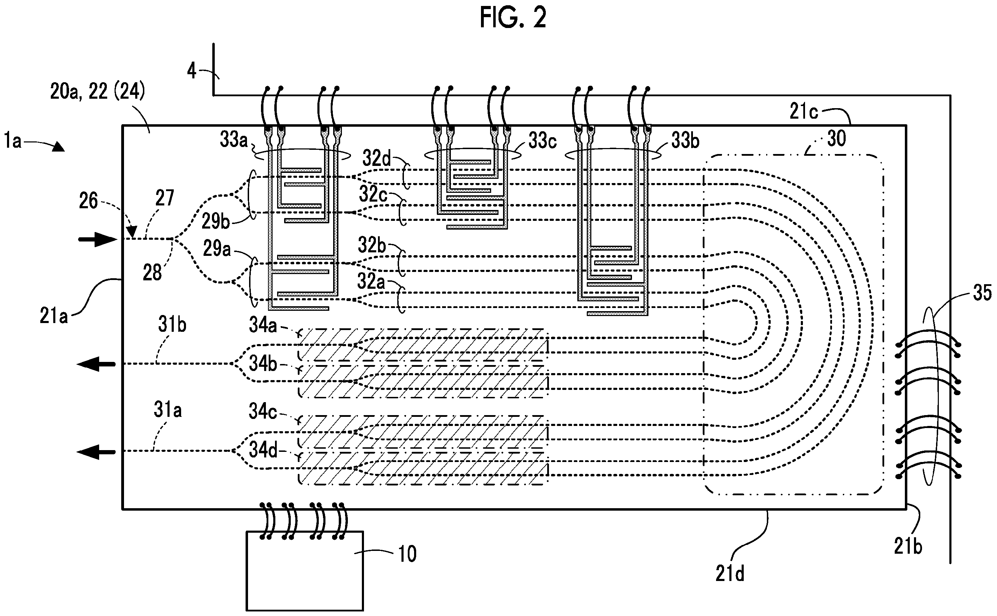

FIG. 2 is a plan view illustrating an example of a configuration of the optical modulation device 1a. The optical modulation device 1a includes the substrate 20a configured with multiple layers. For example, the substrate 20a is rectangular in plan view and has two sides 21a and 21b on the left and the right of the illustration that extend in an up-down direction of the illustration to face each other, and two sides 21c and 21d at the top and the bottom of the illustration that extend in the left-right direction of the illustration to face each other in FIG. 2.

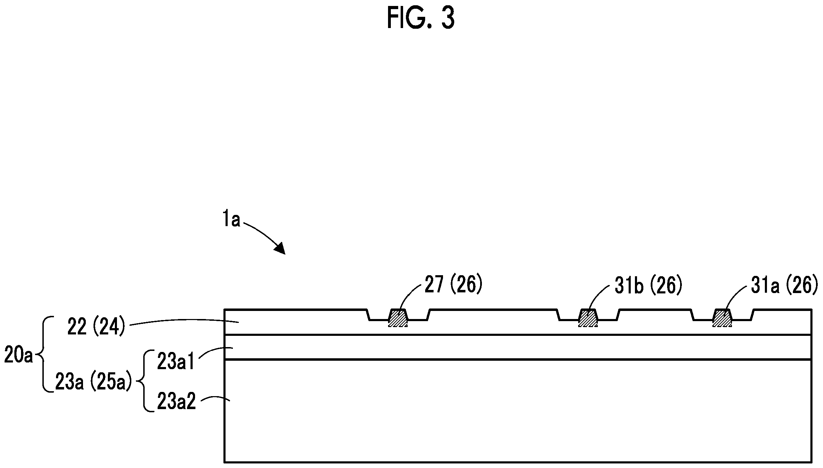

FIG. 3 is a side view of the optical modulation device 1a illustrated in FIG. 2 from the side 21a. The substrate 20a includes an optical waveguide layer 22 and a support layer 23a. In the present embodiment, the support layer 23a includes a first support layer 23a1 and a second support layer 23a2. In the present embodiment, for example, the substrate 20a is formed by laminating a plurality of plate bodies. Specifically, the substrate 20a is configured by laminating an optical substrate 24 and a support substrate 25a. The optical substrate 24 includes the optical waveguide layer 22, and the support substrate 25a includes the support layer 23a formed with the first support layer 23a1 and the second support layer 23a2. For example, the optical substrate 24 is an X-cut LN substrate that has an electro-optic effect and that is processed to have a thickness of 20 $\mu$m or lower (for example, 2 $\mu$m) to be formed as a thin film. For example, the support substrate 25a is a glass substrate including the first support layer 23a1 and the second support layer 23a2 that are configured with different substances or compositions of glass.

The substrate 20a is not necessarily configured with a plurality of plate bodies as described above. The substrate 20a may be configured with a film body formed to have a layer shape on an appropriate substrate. For example, the substrate 20a can be a substrate including the first support layer 23a1 and the optical waveguide layer 22 that are formed to have a layer shape through a film forming process such as sputtering, vapor deposition, and/or crystal growth on an appropriate plate body constituting the second support layer 23a2.

The optical modulation device 1a includes an optical waveguide 26 (the whole thick dotted line illustrated in FIG. 2) formed on the optical waveguide layer 22 (in the present embodiment, on the optical substrate 24) of the substrate 20a. The optical waveguide 26 is a protruding optical waveguide (for example, a rib optical waveguide or a ridge optical waveguide) configured with a protruding portion extending on the optical waveguide layer 22 and, for example, performs coherent multi-level modulation exceeding 100 GBaud.

With reference to FIG. 2, the optical waveguide 26 includes an input waveguide 27 that receives input light (an arrow to the right of the illustration) from the input optical fiber 6a on an upper side of the illustration of the side 21a on the left of the illustration of the optical waveguide layer 22, and a branched waveguide 28 that causes the input light to branch into two light beams having the same light quantity. The optical waveguide 26 also includes so-called nested Mach-Zehnder type optical waveguides 29a and 29b as two modulation portions for modulating each light beam caused to branch by the branched waveguide 28.

The nested Mach-Zehnder type optical waveguides 29a and 29b have a propagation direction of light that is folded by 180 degrees in a folded region 30 of the optical waveguide layer 22 in a right portion of the illustration, and output light to the left of the illustration from the side 21a of the optical waveguide layer 22 via output waveguides 31a and 31b.

The nested Mach-Zehnder type optical waveguides 29a and 29b include two Mach-Zehnder type optical waveguides 32a and 32b, and two Mach-Zehnder type optical waveguides 32c and 32d, respectively, provided in two waveguide portions forming a pair of arm waveguides. Hereinafter, the Mach-Zehnder type optical waveguides 32a, 32b, 32c, and 32d will be collectively referred to as Mach-Zehnder type optical waveguides 32. Each Mach-Zehnder type optical waveguide 32 includes two arm waveguides.

A bias electrode 33a for adjusting operating points of the nested Mach-Zehnder type optical waveguides 29a and 29b is formed in an upper portion of the illustration of the optical waveguide layer 22 upstream of the folded region 30 along a propagation direction of a light wave of the optical waveguide 26. The Mach-Zehnder type optical waveguides 32a, 32b and the Mach-Zehnder type optical waveguides 32c and 32d are also provided with bias electrodes 33b and 33c, respectively, for adjusting their operating points.

Modulation electrodes for causing each of the four Mach-Zehnder type optical waveguides 32a, 32b, 32c, and 32d to perform a modulation operation are also formed in modulation portions 34a, 34b, 34c, and 34d illustrated in a lower portion of the illustration of the nested Mach-Zehnder type optical waveguides 29a and 29b folded in the folded region 30. Hereinafter, the modulation portions 34a, 34b, 34c, and 34d will be collectively referred to as modulation portions 34.

The high-frequency electrical signal for causing each Mach-Zehnder type optical waveguide 32 to perform the modulation operation is input from the relay substrate 4 through wire bonding 35 on the right of the illustration. The high-frequency electrical signal propagates through the modulation electrode formed in each modulation portion 34 and is terminated by a termination resistor (not illustrated) provided in the terminator 10 illustrated at the bottom of the illustration.

In order to avoid complication of the illustration to facilitate understanding, FIG. 2 does not illustrate details of the electrodes formed in the modulation portions 34a, 34b, 34c, and 34d. A segmented electrode formed to be divided into a plurality of segments along the propagation direction of light in the optical waveguide, as in the prior art illustrated in FIG. 13, is formed in each modulation portion 34 as the modulation electrode.

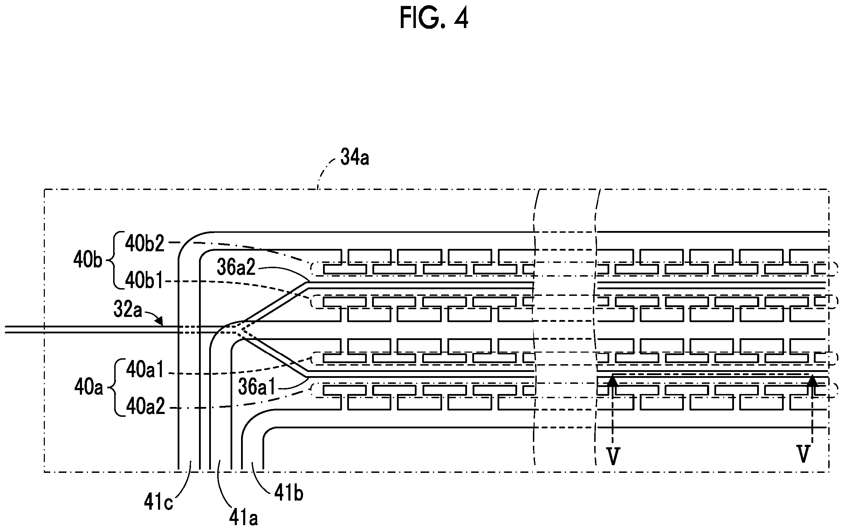

For example, FIG. 4 illustrates a configuration of the modulation electrode in the modulation portion 34a. The modulation electrodes of the other modulation portions 34b, 34c, and 34d are also configured as in FIG. 4.

In FIG. 4, modulation electrodes 40a and 40b control light waves propagating through arm waveguides 36a1 and 36a2 of the Mach-Zehnder type optical waveguide 32a, respectively.

The modulation electrode 40a includes a hot electrode 40a1 and a ground electrode 40a2 facing each other with one arm waveguide 36a1 interposed therebetween in a surface of the optical waveguide layer 22. Similarly, the modulation electrode 40b includes a hot electrode 40b1 and a ground electrode 40b2 facing each other with the other arm waveguide 36a2 interposed therebetween in the surface of the optical waveguide layer 22.

The modulation electrodes 40a and 40b are configured as segmented electrodes divided into a plurality of portions along optical propagation directions of the arm waveguides 36a1 and 36a2, respectively. Specifically, each of the hot electrode 40a1 and the ground electrode 40a2 constituting the modulation electrode 40a is divided into a plurality of portions (segments) having the same length along the optical propagation direction of the arm waveguide 36a1, and gaps between the segments are arranged at constant clearances. Each of the hot electrode 40b1 and the ground electrode 40b2 constituting the modulation electrode 40b is also divided into a plurality of segments having the same length along the optical propagation direction of the arm waveguide 36a2, and gaps between the segments are arranged at constant clearances. For example, the number of segments of each of the hot electrodes 40a1 and 40b1 and the ground electrodes 40a2 and 40b2 is in the order of several thousands. However, the number of segments may be any number in accordance with optical modulation characteristics required for the optical modulation device 1a.

Each segment of the hot electrodes 40a1 and 40b1 is electrically connected to each other by a hot transmission channel 41a. In addition, each segment of the ground electrode 40a2 is electrically connected to each other by a ground transmission channel 41b, and each segment of the ground electrode 40b2 is electrically connected to each other by a ground transmission channel 41c. Accordingly, the hot electrodes 40a1 and 40b1 connected to each other by the hot transmission channel 41a, the ground electrode 40a2 connected to the ground transmission channel 41b, and the ground electrode 40b2 connected to the ground transmission channel 41c constitute a coplanar electrode as a whole.

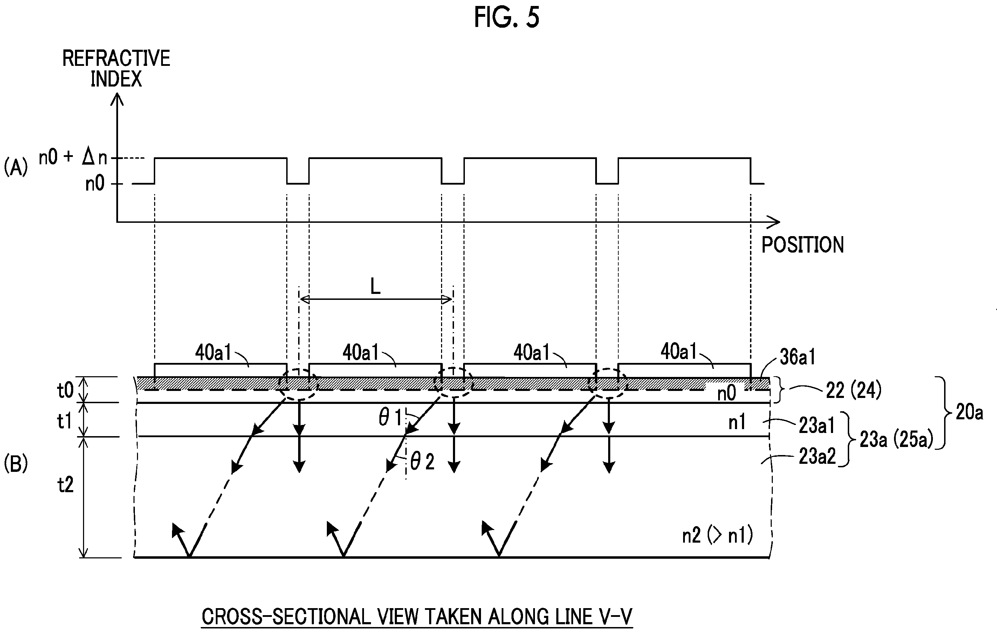

FIG. 5 is a cross-sectional view taken along line V-V along the arm waveguide 36a1 in the modulation portion 34a illustrated in FIG. 4. In FIG. 5, lower part (B) illustrates a configuration of the optical modulation device 1a in a V-V cross section, and upper part (A) is a graph illustrating a change in a refractive index of the arm waveguide 36a1 along the optical propagation direction in the V-V cross section.

As illustrated in (A) of FIG. 5, in the arm waveguide 36a1, as in the arm waveguide 92a of the optical modulation device 90 according to the prior art illustrated in FIG. 15, in a case where a high-frequency signal is transmitted to the modulation electrode 40a, an electric field is applied to the arm waveguide 36a1 in a portion in which the segments of the hot electrode 40a1 and the segments of the ground electrode 40a2 face each other. Accordingly, the refractive index changes (for example, increases) by $\Delta n$ from a refractive index n0 (substrate refractive index n0) of the optical waveguide layer 22 (that is, the optical substrate 24). In gap portions in which the segments do not face each other, an electric field is not applied to the arm waveguide 36a1. Thus, the refractive index remains as the substrate refractive index n0.

Each of portions of the unchanging refractive index (that is, portions in which the refractive index does not change from the substrate refractive index n0) that occur at positions of the gap portions in which the segments of the modulation electrode 40a do not face each other in the arm waveguide 36a1 has disturbance in a change in the refractive index of the arm waveguide 36a1 along the optical propagation direction. In each of the portions having disturbance in the refractive index, leaked light beams may occur from the arm waveguide 36a1 formed on the optical waveguide layer 22, as in the optical modulation device 90 according to the prior art.

However, in order not to cause the leaked light beams to interfere with each other, in the present embodiment, particularly, the support layer 23a included in the substrate 20a is configured with two layers including the first support layer 23a1 and the second support layer 23a2 that have different refractive indices. The refractive index n0 of the optical waveguide layer 22 on which the optical waveguide 26 is formed, a refractive index n1 of the first support layer 23a1, and a refractive index n2 of the second support layer 23a2 have the following relationship in Expression (1).

$$n0 > n1 \text{ and } n2 > n1 \quad (1)$$

Accordingly, the leaked light beams generated from the arm waveguide 36a1 formed on the optical waveguide layer 22 is input into the first support layer 23a1 having the refractive index n1 lower than the refractive index n0 of the optical waveguide layer 22 and is then input into the second support layer 23a2 having the refractive index n2 higher than that of the first support layer 23a1.

A refraction angle $\theta 2$ of the leaked light beam in passing through a boundary surface between the first support layer 23a1 and the second support layer 23a2 is n1/n2 (< 1) times smaller than an input angle $\theta 1$. Accordingly, a spread angle of each leaked light beam input into the second support layer 23a2 is decreased below the spread angle of the leaked light beam in the first support layer 23a1. Thus, overlapping between the leaked light beams in the second support layer 23a2 is suppressed, and occurrence of the interference between the leaked light beams is suppressed.

The modulation electrode 40b of the arm waveguide 36a2 and the modulation electrodes of the arm waveguides of the Mach-Zehnder type optical waveguides 32 in other modulation portions 34 are also configured in the same manner as the modulation electrode 40a of the arm waveguide 36a1. Even for the leaked light beams generated in these arm waveguides, the overlapping between the leaked light beams is suppressed in the second support layer 23a2, and the occurrence of the interference between the leaked light beams is suppressed, as described above.

Hereinafter, the arm waveguides of each Mach-Zehnder type optical waveguide 32 including the arm waveguides 36a1 and 36a2 of the Mach-Zehnder type optical waveguide 32a will be collectively referred to as arm waveguides 36. The modification electrodes provided in the arm waveguides 36 in each modulation portion 34 including the modulation electrodes 40a and 40b provided in the arm waveguides 36a1 and 36a2 in the modulation portion 34a will be collectively referred to as modulation electrodes 40.

The above action suppresses the intensification caused by the interference between the leaked light beams generated from each arm waveguide 36 formed on the optical waveguide layer 22 while the leaked light beams propagate through the second support layer 23a2. Consequently, even in a case where the leaked light beams reach the optical waveguide layer 22 again to be combined with the signal light propagating through the optical waveguide 26, an effect of the leaked light beams on the optical characteristics of the optical modulation device 1a is suppressed to be low compared to that in the optical modulation device 90 of the prior art.

In order to effectively suppress the interference between the leaked light beams generated in the arm waveguides 36 of the Mach-Zehnder type optical waveguides 32 formed on the optical waveguide layer 22 using the above action, it may be important to suppress the interference between the leaked light beams in the first support layer 23a1 before the leaked light beams reach the second support layer 23a2. Specifically, the interference between the leaked light beams in the first support layer 23a1 depends on a clearance L between the gaps arranged at constant clearances between each segment constituting the modulation electrodes 40 and/or a thickness t1 of the first support layer 23a1. The clearance L between the gaps refers to a distance between centers of each gap in a length direction along the corresponding arm waveguide 36.

More specifically, in order to suppress the interference between the leaked light beams in the first support layer 23a1, the clearance L between the gaps of the segments constituting the modulation electrodes 40 preferably satisfies Expression (2) illustrated below and more preferably satisfies Expression (3) with respect to a wavelength $\lambda$ of the light wave propagating through the optical waveguide 26 and the refractive index n1 of the first support layer 23a1.

$$L > 4 \times \lambda/n1 \quad (2)$$

$$L > 10 \times \lambda/n1 \quad (3)$$

In order to suppress the interference between the leaked light beams in the first support layer 23a1, the thickness t1 of the first support layer 23a1 preferably satisfies Expression (4) illustrated below and more preferably satisfies Expression (5).

$$t1 < 10 \times \lambda/n1 \quad (4)$$

$$t1 < 4 \times \lambda/n1 \quad (5)$$

In the present embodiment, for example, the wavelength $\lambda$ of the light wave propagating through the optical waveguide 26 is 1.55 $\mu$m, and the clearance L between the gaps of the segments constituting the modulation electrodes 40 is 50 $\mu$m. For example, the optical waveguide layer 22 has a thickness t0 of 1 $\mu$m in the optical waveguide 26 and has the refractive index n0 of 2.2 in the wavelength $\lambda$. For example, the first support layer 23a1 is formed of $SiO_2$, has the thickness t1 of 3 $\mu$m, and has the refractive index n1 of 1.48 in the wavelength $\lambda$. For example, the second support layer 23a2 is formed of alkali-free glass, has a thickness t2 of 300 $\mu$m, and has the refractive index n2 of 1.56 in the wavelength $\lambda$. Instead of alkali-free glass, a semiconductor material such as Si (having a refractive index of 3.5 in the wavelength $\lambda$) can also be used in the second support layer 23a2.

While the whole substrate 20a is configured with multiple layers in the present embodiment, the whole substrate 20a is not necessarily configured with multiple layers. For example, the action and the effect of suppressing the interference between the leaked light beams can be achieved in a case where the substrate 20a is configured with multiple layers in at least a lower portion of the modulation portions 34 in which the modulation electrodes 40 which are the segmented electrodes are formed.

That is, the substrate 20a may include at least a multilayer portion configured with multiple layers, and the multilayer portion may include the optical waveguide layer 22, the first support layer 23a1 in contact with a lower surface of the optical waveguide layer 22, and the second support layer 23a2 in contact with a lower surface of the first support layer 23a1.

In the present embodiment and each embodiment described below, the clearance L between the gaps between the adjacent segments is not necessarily constant in all sections (that is, the whole) of each modulation electrode 40. The clearance L between the gaps between the adjacent segments may be constant in all sections of the modulation electrode 40 or a section excluding a part of the sections of the modulation electrode 40. Similarly, each segment does not necessarily have the same length in all sections of each modulation electrode 40. Each segment may have a constant length in all sections of the modulation electrode 40 or a section excluding a part of the sections of the modulation electrode 40. For example, in a case where the modulation electrode 40 is divided into several hundred to several thousand segments, the lengths of the segments and/or the clearance between the gaps between the adjacent segments in one section or a plurality of sections of the modulation electrode 40 may be different from the lengths of the segments and/or the clearance between the gaps between the adjacent segments in other sections.

2. Second Embodiment

Next, an optical modulation device 1b according to a second embodiment of the present invention will be described. The optical modulation device 1b has the same configuration as the optical modulation device 1a except for including a substrate 20b instead of the substrate 20a. The optical modulation device 1b may be used by mounting the optical modulation device 1b on the optical modulator 2 instead of the optical modulation device 1a.

A plan view of the optical modulation device 1b is the same as the plan view of the optical modulation device 1a illustrated in FIGS. 2 and 4. Thus, FIGS. 2 and 4 and the description for FIGS. 2 and 4 are incorporated herein.

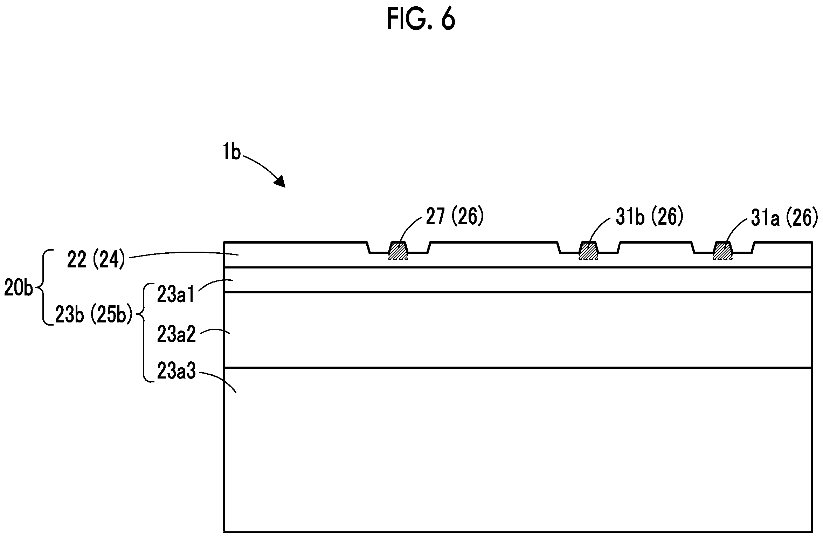

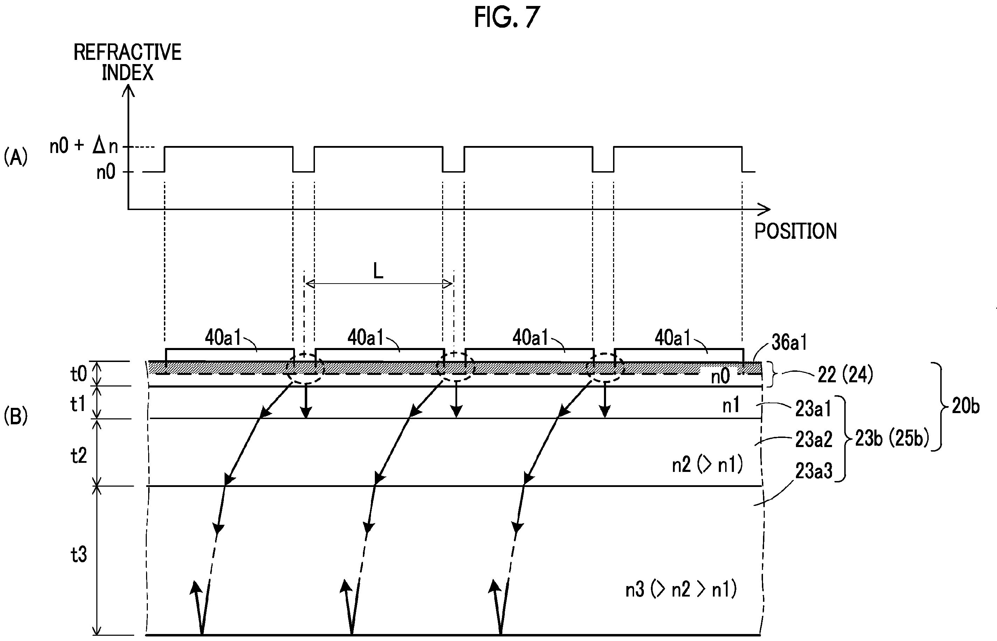

FIG. 6 is a side view of the optical modulation device 1b seen from the side 21a and is a diagram corresponding to FIG. 3 for the optical modulation device 1a according to the first embodiment. FIG. 7 is a cross-sectional view taken along the arm waveguide 36a1 in the modulation portion 34a of the optical modulation device 1b and is a diagram corresponding to FIG. 5 for the optical modulation device 1a according to the first embodiment.

In FIGS. 6 and 7, the same constituents as the constituents illustrated in FIGS. 3 and 5 are designated using the same reference numerals as the reference numerals illustrated in FIGS. 3 and 5, and the description for FIGS. 3 and 5 is incorporated herein.

With reference to FIGS. 6 and 7, the substrate 20b constituting the optical modulation device 1b has the same configuration as the substrate 20a except for including a support layer 23b instead of the support layer 23a. The support layer 23b has the same configuration as the support layer 23a except for including a third support layer 23a3 in contact with a lower surface of the second support layer 23a2 in addition to the first support layer 23a1 and the second support layer 23a2. For example, the substrate 20b is configured by laminating a lower surface of the optical substrate 24 with a support substrate 25b including the first support layer 23a1, the second support layer 23a2, and the third support layer 23a3, instead of the support substrate 25a.

The substrate 20b is not necessarily configured with a plurality of plate bodies, like the substrate 20a. The substrate 20b may be configured with a film body formed to have a layer shape on an appropriate substrate. For example, the substrate 20b can be a substrate including the second support layer 23a2, the first support layer 23a1, and the optical waveguide layer 22 that are formed to have a layer shape through a film forming process such as sputtering, vapor deposition, and/or crystal growth on an appropriate plate body constituting the third support layer 23a3.

In FIG. 7, lower part (B) illustrates a configuration of the optical modulation device 1b in a cross section along the arm waveguide 36a1, and upper part (A) is a graph illustrating a change in a refractive index of the arm waveguide 36a1 along the optical propagation direction in the cross section, as in FIG. 5.

In the optical modulation device 1b, the support layer 23b included in the substrate 20b is configured with three layers including the first support layer 23a1, the second support layer 23a2, and the third support layer 23a3 that have different refractive indices. The refractive index n0 of the optical waveguide layer 22 on which the optical waveguide 26 is formed, the refractive index n1 of the first support layer 23a1, the refractive index n2 of the second support layer 23a2, and a refractive index n3 of the third support layer 23a3 have the following relationship in Expression (6).

$$n0 > n1, \; n2 > n1, \; \text{and} \; n3 > n2 > n1 \quad (6)$$

Accordingly, the leaked light beams generated from the arm waveguide 36a1 formed on the optical waveguide layer 22 are refracted in a direction in which spread of the leaked light beams is narrowed, twice in passing through the boundary surface between the first support layer 23a1 and the second support layer 23a2 and passing through a boundary surface between the second support layer 23a2 and the third support layer 23a3. Accordingly, the spread angle of each leaked light beam input into the third support layer 23a3 is further decreased below the spread angle in the second support layer 23a2 of the optical modulation device 1a according to the first embodiment. Thus, the overlapping between the leaked light beams is further suppressed, and the occurrence of the interference between the leaked light beams is more effectively suppressed.

The above action also occurs in the arm waveguide 36a2 and each arm waveguide 36 of the Mach-Zehnder type optical waveguides 32 in the other modulation portions 34.

Compared to the action in the optical modulation device 1a according to the first embodiment, the above action further suppresses an increase in the intensity of the leaked light beams caused by the interference between the leaked light beams generated from the arm waveguides 36 formed on the optical waveguide layer 22 while the leaked light beams propagate through the third support layer 23a3. Consequently, even in a case where the leaked light beams reach the optical waveguide layer 22 again to be combined with the signal light propagating through the optical waveguide 26, the effect of the leaked light beams on the optical characteristics of the optical modulation device 1b is suppressed to be further low compared to that in the optical modulation device 90 of the prior art.

For the optical modulation device 1b, preferable conditions related to the clearance L between the gaps between the segments constituting the modulation electrodes 40 along the corresponding arm waveguide 36 and the thickness t1 of the first support layer 23a1 are the same as illustrated in Expressions (2) to (5).

In the present embodiment, for example, the wavelength $\lambda$ of the light wave propagating through the optical waveguide 26 is 1.55 $\mu$m, and the clearance L between the gaps of the segments constituting the modulation electrodes 40 is 50 $\mu$m. For example, the optical waveguide layer 22 has the thickness t0 of 1 um in the optical waveguide 26 and has the refractive index n0 of 2.2 in the wavelength $\lambda$. For example, the first support layer 23a1 is formed of $SiO_2$, has the thickness t1 of 3 um, and has the refractive index n1 of 1.48 in the wavelength $\lambda$. For example, the second support layer 23a2 is formed of alkali-free glass, has the thickness t2 of 200 $\mu$m, and has the refractive index n2 of 1.56 in the wavelength $\lambda$. The third support layer 23a3 is formed of Si, has a thickness t3 of 300 um, and has the refractive index n3 of 3.5 in the wavelength $\lambda$.

Even in the present embodiment, the action and the effect of suppressing the interference between the leaked light beams as in the substrate 20a of the first embodiment can be achieved in a case where the substrate 20b is configured with multiple layers in at least a lower portion of the modulation portions 34 in which the modulation electrodes 40 which are the segmented electrodes are formed.

That is, the substrate 20b may include at least a multilayer portion configured with multiple layers, and the multilayer portion may include the optical waveguide layer 22, the first support layer 23a1 in contact with the lower surface of the optical waveguide layer 22, the second support layer 23a2 in contact with the lower surface of the first support layer 23a1, and the third support layer 23a3 in contact with the lower surface of the second support layer 23a2.

3. Third Embodiment

Next, an optical modulation device 1c according to a third embodiment of the present invention will be described. The optical modulation device 1c has the same configuration as the optical modulation device 1a except that a light absorbing material that absorbs light in a wavelength range of the light wave propagating through the optical waveguide 26 is disposed on the back surface of the substrate 20a facing the surface of the optical waveguide layer 22. The optical modulation device 1c may be used by mounting the optical modulation device 1c on the optical modulator 2 instead of the optical modulation device 1a.

A plan view of the optical modulation device 1c is the same as the plan view of the optical modulation device 1a illustrated in FIGS. 2 and 4. Thus, FIGS. 2 and 4 and the description for FIGS. 2 and 4 are incorporated herein.

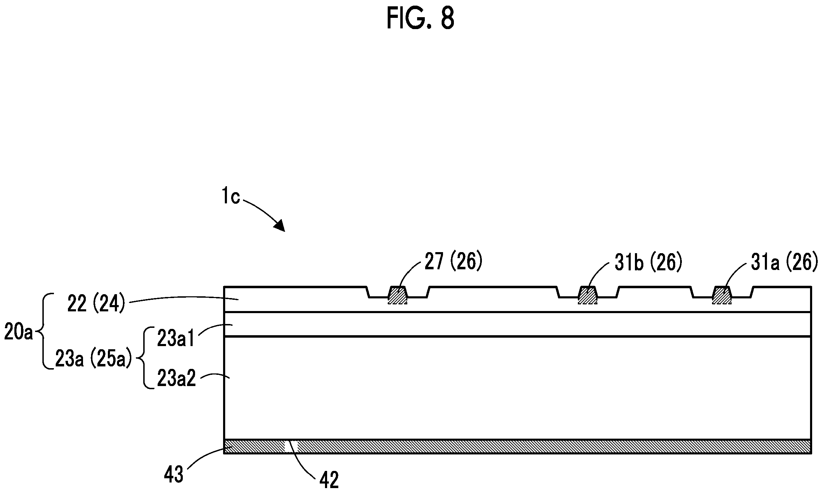

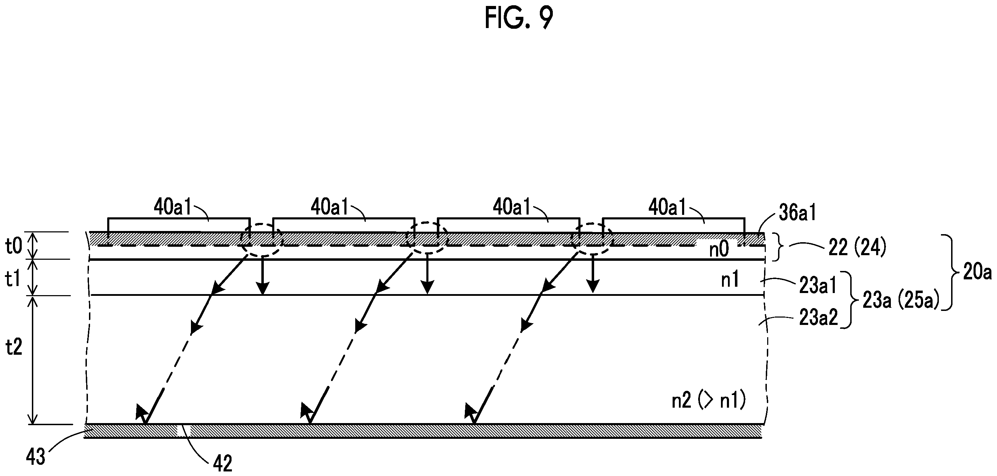

FIG. 8 is a side view of the optical modulation device 1c seen from the side 21a and is a diagram corresponding to FIG. 3 for the optical modulation device 1a according to the first embodiment. FIG. 9 is a cross-sectional view taken along the arm waveguide 36a1 in the modulation portion 34a of the optical modulation device 1c and is a diagram corresponding to FIG. 5 for the optical modulation device 1a according to the first embodiment. The graph of the refractive index in the arm waveguide 36a1 in FIG. 9 is the same as that in FIG. 5 and thus, will not be described.

In FIGS. 8 and 9, the same constituents as the constituents illustrated in FIGS. 3 and 5 are designated using the same reference numerals as the reference numerals illustrated in FIGS. 3 and 5, and the description for FIGS. 3 and 5 is incorporated herein.

With reference to FIGS. 8 and 9, in the optical modulation device 1c, a light absorbing material 43 that absorbs light in the wavelength range of the light wave propagating through the optical waveguide 26 is disposed on the whole back surface 42 of the substrate 20a facing the surface of the optical waveguide layer 22. Accordingly, in the optical modulation device 1c, the leaked light beams generated from the arm waveguides 36 of the optical waveguide layer 22 are absorbed by the light absorbing material 43 to be attenuated in a case where the leaked light beams propagate through the second support layer 23a2 and reach the back surface 42. Consequently, in the optical modulation device 1c, the intensity of the leaked light beams reaching the optical waveguide layer 22 again is reduced, and the effect of the leaked light beams on the optical characteristics of the optical modulation device 1c is further effectively suppressed compared to that in the optical modulation device 90 of the prior art.

For example, the light absorbing material 43 may be a carbon material such as carbon black, a black resin such as a cashew oil, or a metal filler such as Ag. For example, these types of the light absorbing material 43 may be applied to the back surface 42 of the substrate 20a and cured to be disposed on the back surface 42 using an appropriate resin as a binder.

While the light absorbing material 43 is disposed on the whole surface of the back surface 42 of the substrate 20a in the present embodiment, the light absorbing material 43 may be applied to a part of the back surface 42. For example, the effect of attenuating the leaked light beams can be achieved in a case where the light absorbing material 43 is disposed in at least a range of the back surface 42 corresponding to the lower portion of the modulation portions 34 in which the modulation electrodes 40 which are the segmented electrodes are formed.

In mounting the optical modulation device 1c on the case 3, the optical modulation device 1c may be fixed to the case 3 by, for example, providing an adhesive layer between the case 3 and a surface of the light absorbing material 43 disposed on the back surface 42 of the substrate 20a and a surface of the back surface 42 on which the light absorbing material 43 is not applied.

4. Fourth Embodiment

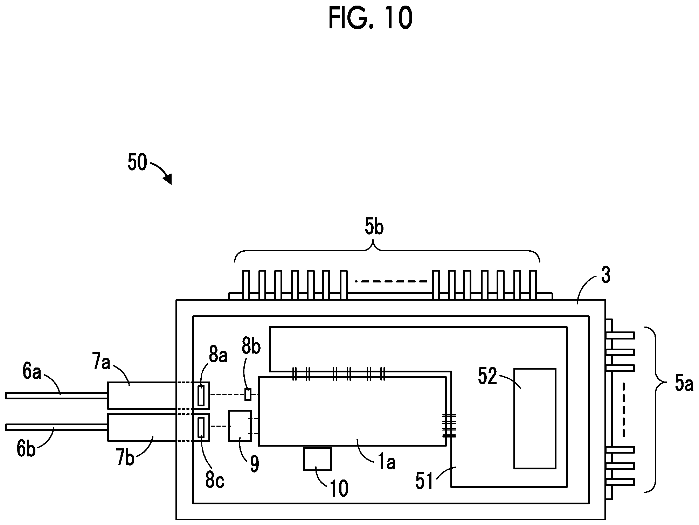

Next, a fourth embodiment of the present invention will be described. In the present embodiment, the optical modulation device 1a according to the first embodiment is included in an optical modulation module 50. FIG. 10 is a diagram illustrating a configuration of the optical modulation module 50 according to the present embodiment. In FIG. 10, the same constituents as those of the optical modulator 2 according to the first embodiment illustrated in FIG. 1 are designated using the same reference numerals as the reference numerals illustrated in FIG. 1, and the description for FIG. 1 is incorporated herein.

The optical modulation module 50 has the same configuration as the optical modulator 2 illustrated in FIG. 1 except for including a circuit substrate 51 instead of the relay substrate 4. The circuit substrate 51 includes a drive circuit 52. For example, the drive circuit 52 generates a high-frequency electrical signal for driving the optical modulation device 1a based on a modulation signal supplied from the outside through the signal pin 5a and outputs the generated high-frequency electrical signal to the optical modulation device 1a.

Since the optical modulation module 50 having the above configuration includes the optical modulation device 1a like the optical modulator 2 according to the first embodiment, the optical modulation module 50 can implement a favorable optical modulation operation by reducing the effect of the leaked light beams from the arm waveguides 36 provided with the modulation electrodes 40, which are the segmented electrodes, on the optical characteristics of the optical modulation device 1a, like the optical modulator 2.

While the optical modulation module 50 includes, for example, the optical modulation device 1a in the present embodiment, the optical modulation module 50 may include the optical modulation device 1b according to the second embodiment or the optical modulation device 1c according to the third embodiment.

5. Fifth Embodiment

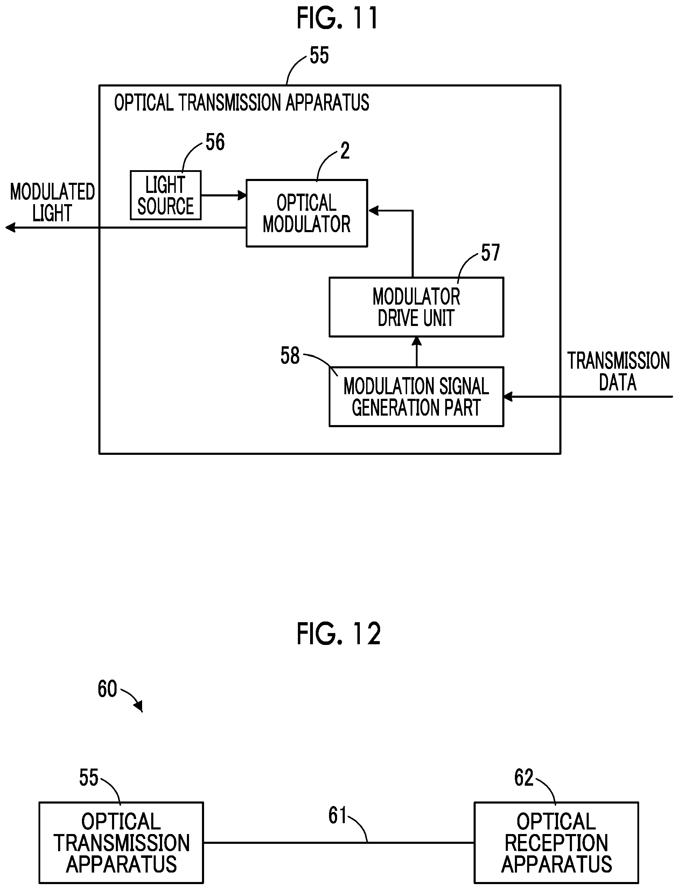

Next, a fifth embodiment of the present invention will be described. In the present embodiment, the optical modulator 2 according to the first embodiment is mounted on an optical transmission apparatus 55. FIG. 11 is a diagram illustrating a configuration of the optical transmission apparatus 55 according to the present embodiment. The optical transmission apparatus 55 includes the optical modulator 2, a light source 56 that inputs light into the optical modulator 2, a modulator drive unit 57, and a modulation signal generation part 58. The optical modulation module 50 according to the fourth embodiment can be used instead of the optical modulator 2 and the modulator drive unit 57. The optical modulator 2 may include the optical modulation device 1b or the optical modulation device 1c instead of the optical modulation device 1a.

The modulation signal generation part 58 is an electronic circuit for generating an electrical signal for causing the optical modulator 2 to perform the modulation operation, and generates a modulation signal that is a high-frequency signal for causing the optical modulator 2 to perform an optical modulation operation in accordance with corresponding modulation data, based on transmission data provided from the outside and outputs the modulation signal to the modulator drive unit 57.

The modulator drive unit 57 amplifies the modulation signal input from the modulation signal generation part 58 to output four sets of high-frequency electrical signals for driving each modulation electrode 40 provided in the four Mach-Zehnder type optical waveguides 32 of the optical modulation device 1a included in the optical modulator 2.

These high-frequency electrical signals are input into the signal pin 5a of the optical modulator 2 to drive the optical modulation device 1a. Accordingly, for example, the light output from the light source 56 is subjected to DPQPSK modulation by the optical modulator 2 and is output from the optical transmission apparatus 55 as modulated light.

In the optical transmission apparatus 55, since the optical modulator 2 or the optical modulation module 50 including the optical modulation device 1a, 1b, or 1c is used, favorable optical transmission can be performed by implementing favorable modulation characteristics.

6. Sixth Embodiment

Next, a sixth embodiment of the present invention will be described. In the present embodiment, the optical transmission apparatus 55 according to the fifth embodiment is used in an optical transmission system 60. FIG. 12 is a diagram illustrating a configuration of the optical transmission system 60 according to the present embodiment. The optical transmission system 60 includes the optical transmission apparatus 55 according to the fifth embodiment, an optical fiber transmission channel 61 for transmitting a modulated optical signal that is output light of the optical transmission apparatus 55, and an optical reception apparatus 62 that receives the optical signal transmitted by the optical fiber transmission channel 61. The optical transmission system 60 transmits the optical signal via the optical transmission apparatus 55 using the optical modulator 2 or the optical modulation module 50 including the optical modulation device 1a, 1b, or 1c. Thus, the optical transmission system 60 has favorable optical transmission performance.

7. Other Embodiments

While the optical waveguide layer 22 on which the optical waveguide 26 is formed is included in the optical substrate 24 which is the LN substrate in the first to third embodiments, the optical waveguide layer 22 is not necessarily formed of LN. The optical waveguide layer 22 may be formed of a semiconductor material such as InP.

In the embodiments, the substrates 20a and 20b configured with multiple layers are configured by laminating a plurality of plate bodies. However, this is only an example, and the substrates 20a and 20b may be configured with a film body formed to have a layer shape on an appropriate substrate, as described above.

In the embodiments, the optical substrate 24 as a plate body constituting the optical waveguide layer 22 and the support substrate 25a as a plate body constituting the first support layer 23a1 and the second support layer 23a2 are laminated in the substrate 20a. However, the optical substrate 24 and the support substrate 25a are examples of plate bodies constituting the substrate 20a, and any distribution of the layers included in each of the plurality of plate bodies may be used. That is, in a case where a substrate such as the substrate 20a or 20b is formed by laminating a plurality of plate bodies, each plate body may include one layer or a plurality of layers of any number among the optical waveguide layer 22 and a plurality of support layers such as the first support layer 23a1.

The present invention is not limited to the configurations of the embodiments and can be embodied in various aspects without departing from its gist.

8. Configurations Supported by Embodiments

The embodiments support the following configurations.

(Configuration 1) An optical modulation device including a substrate including a multilayer portion configured with multiple layers, an optical waveguide layer on which an optical waveguide is formed in the multilayer portion of the substrate, and a modulation electrode that is an electrode formed on the optical waveguide layer to control a light wave propagating through the optical waveguide and that is formed to be divided into a plurality of segments along a propagation direction of light of the optical waveguide, in which in all sections of the electrode or a section excluding a part of the sections of the electrode, a clearance L, measured in an extending direction of the optical waveguide, between gaps between adjacent segments is constant, the multilayer portion of the substrate includes the optical waveguide layer, a first support layer in contact with a lower surface of the optical waveguide layer, and a second support layer in contact with a lower surface of the first support layer, and a refractive index n0 of the optical waveguide layer, a refractive index n1 of the first support layer, and a refractive index n2 of the second support layer have a relationship of n0 > n1 and n2 > n1.

According to the optical modulation device of Configuration 1, intensification caused by interference between leaked light beams from the optical waveguide caused by the gaps between the segments of the optical modulation electrode which is a segmented electrode formed to be divided into a plurality of segments along the propagation direction of the light of the optical waveguide can be suppressed. Accordingly, in the optical modulation device of Configuration 1, favorable optical characteristics can be implemented by reducing an effect of the leaked light beams on optical characteristics of the optical modulation device.

(Configuration 2) In the optical modulation device according to Configuration 1, with respect to a wavelength λ of the light wave propagating through the optical waveguide and the refractive index n1 of the first support layer, the clearance L has a relationship of L > 4 × λ/n1.

According to the optical modulation device of Configuration 2, more favorable optical characteristics can be implemented by suppressing the intensification caused by the interference between the leaked light beams.

(Configuration 3) In the optical modulation device according to Configuration 1 or 2, with respect to a wavelength λ of the light wave propagating through the optical waveguide and the refractive index n1 of the first support layer, a thickness t1 of the first support layer has a relationship of t1 < 10 × λ/n1.

According to the optical modulation device of Configuration 3, more favorable optical characteristics can be implemented by suppressing the intensification caused by the interference between the leaked light beams in the first support layer.

(Configuration 4) In the optical modulation device according to any one of Configurations 1 to 3, the multilayer portion of the substrate further includes a third support layer in contact with a lower surface of the second support layer, and the refractive index n0 of the optical waveguide layer, the refractive index n1 of the first support layer, the refractive index n2 of the second support layer, and a refractive index n3 of the third support layer have a relationship of n0 > n1 and n3 > n2 > n1.

According to the optical modulation device of Configuration 4, further favorable optical characteristics can be implemented by further suppressing the intensification caused by the interference between the leaked light beams by configuring a support layer with three layers.

(Configuration 5) In the optical modulation device according to any one of Configurations 1 to 4, a light absorbing material that absorbs light in a wavelength range of the light wave propagating through the optical waveguide is disposed on a back surface of the substrate facing a surface of the optical waveguide layer.

According to the optical modulation device of Configuration 5, further favorable optical characteristics can be implemented by reducing intensity of the leaked light beams that have reached the back surface of the substrate via the light absorbing material disposed on the back surface to effectively reduce the effect of the leaked light beams on the optical characteristics of the optical modulation device.

(Configuration 6) In the optical modulation device according to Configuration 5, the light absorbing material is a carbon material, a black resin, or a metal filler.

According to the optical modulation device of Configuration 6, further favorable optical characteristics of the optical modulation device can be implemented by effectively reducing the intensity of the leaked light beams that have reached the back surface of the substrate.

(Configuration 7) In the optical modulation device according to any one of Configurations 1 to 6, the substrate is formed by laminating a plurality of plate bodies, and each plate body includes one layer or a plurality of layers of any number among the optical waveguide layer and a plurality of support layers including the first support layer and the second support layer.

According to the optical modulation device of Configuration 7, a substrate including a plurality of support layers and an optical waveguide layer in which an optical waveguide is formed can be easily configured.

(Configuration 8) An optical modulator includes the optical modulation device according to any one of Configurations 1 to 7, a case for accommodating the optical modulation device, an optical fiber for inputting light into the optical modulation device, and an optical fiber for guiding light output from the optical modulation device to an outside of the case.

According to the optical modulator of Configuration 8, since the optical modulation device of any one of Configurations 1 to 7 is used, an optical modulator having favorable optical characteristics may be implemented.

(Configuration 9) An optical modulation module includes the optical modulation device according to any one of Configurations 1 to 7, a case for accommodating the optical modulation device, an optical fiber for inputting light into the optical modulation device, an optical fiber for guiding light output from the optical modulation device to an outside of the case, and a drive circuit for driving the optical modulation device.

According to the optical modulation module of Configuration 9, since the optical modulation device of any one of Configurations 1 to 7 is used, an optical modulation module having favorable optical characteristics may be implemented.

(Configuration 10) An optical transmission apparatus includes the optical modulator according to Configuration 8 or the optical modulation module according to Configuration 9, and an electronic circuit for generating an electrical signal for causing the optical modulation device to perform a modulation operation.

According to the optical transmission apparatus of Configuration 10, since the optical modulator or the optical modulation module using the optical modulation device of any one of Configurations 1 to 7 is used, favorable optical transmission characteristics can be implemented.

(Configuration 11) An optical transmission system includes the optical transmission apparatus according to Configuration 10, and an optical fiber transmission channel through which output light of the optical modulation device is transmitted.

According to the optical transmission system of Configuration 11, since the optical transmission apparatus using the optical modulation device of any one of Configurations 1 to 7 is used, favorable optical transmission characteristics can be implemented.

An optical modulation device includes a substrate including a multilayer portion, an optical waveguide layer on which an optical waveguide is formed in the multilayer portion, and a modulation electrode formed to be divided into a plurality of segments along a propagation direction of the optical waveguide to control a light wave propagating through the optical waveguide, in which in all sections of the electrode or a section excluding a part of the sections, a clearance, measured in an extending direction of the optical waveguide, between gaps between adjacent segments is constant, the multilayer portion includes the optical waveguide layer, a first support layer, and a second support layer, and a refractive index $n0$ of the optical waveguide layer, a refractive index $n1$ of the first support layer, and a refractive index $n2$ of the second support layer have a relationship of $n0 > n1$ and $n2 > n1$.

**Claims**

1. An optical modulation device comprising:

   a substrate (20a, 20b) including a multilayer portion configured with multiple layers;
   an optical waveguide layer (22) on which an optical waveguide (26) is formed in the multilayer portion of the substrate; and
   a modulation electrode (40) that is an electrode formed on the optical waveguide layer to control a light wave propagating through the optical waveguide and that is formed to be divided into a plurality of segments along a propagation direction of light of the optical waveguide, **characterized in that**
   in all sections of the electrode or a section excluding a part of the sections of the electrode, a clearance L, measured in an extending direction of the optical waveguide, between gaps between adjacent segments is constant,
   the multilayer portion of the substrate includes the optical waveguide layer, a first support layer (23a1) in contact with a lower surface of the optical waveguide layer, and a second support layer (23a2) in contact with a lower surface of the first support layer, and
   a refractive index $n0$ of the optical waveguide layer, a refractive index $n1$ of the first support layer, and a refractive index $n2$ of the second support layer have a relationship of

$$n0 > n1 \text{ and } n2 > n1.$$

2. The optical modulation device according to claim 1,
wherein, with respect to a wavelength $\lambda$ of the light wave propagating through the optical waveguide and the refractive index n1 of the first support layer, the clearance L has a relationship of

$$L > 4 \times \lambda/n1.$$

3. The optical modulation device according to claim 1,
wherein, with respect to a wavelength $\lambda$ of the light wave propagating through the optical waveguide and the refractive index n1 of the first support layer, a thickness t1 of the first support layer has a relationship of

$$t1 < 10 \times \lambda/n1.$$

4. The optical modulation device according to claim 1,

wherein the multilayer portion of the substrate further includes a third support layer (23a3) in contact with a lower surface of the second support layer, and
the refractive index n0 of the optical waveguide layer, the refractive index n1 of the first support layer, the refractive index n2 of the second support layer, and a refractive index n3 of the third support layer have a relationship of

$$n0 > n1 \text{ and } n3 > n2 > n1.$$

5. The optical modulation device according to claim 1,
wherein a light absorbing material that absorbs light in a wavelength range of the light wave propagating through the optical waveguide is disposed on a back surface of the substrate facing a surface of the optical waveguide layer.

6. The optical modulation device according to claim 5,
wherein the light absorbing material is a carbon material, a black resin, or a metal filler.

7. The optical modulation device according to claim 1,
wherein the substrate is formed by laminating a plurality of plate bodies, and
each plate body includes one layer or a plurality of layers of any number among the optical waveguide layer and a plurality of support layers including the first support layer and the second support layer.

8. An optical modulator comprising:

the optical modulation device according to claim 1;
a case (3) for accommodating the optical modulation device;
an input optical fiber (6a) for inputting light into the optical modulation device; and
an output optical fiber (6b) for guiding light output from the optical modulation device to an outside of the case.

9. An optical modulation module comprising:

the optical modulation device according to claim 1;
a case (3) for accommodating the optical modulation device;
an input optical fiber (6a) for inputting light into the optical modulation device;
an output optical fiber (6b) for guiding light output from the optical modulation device to an outside of the case; and
a drive circuit for driving the optical modulation device.

10. An optical transmission apparatus **characterized by** comprising:

the optical modulator according to claim 8 or the optical modulation module according to claim 9; and
an electronic circuit for generating an electrical signal for causing the optical modulation device to perform a modulation operation.

11. An optical transmission system **characterized by** comprising:

the optical transmission apparatus according to claim 10; and
an optical fiber transmission channel (61) through which output light of the optical modulation device is transmitted.

FIG. 1

FIG. 2

FIG. 3

EP 4 603 896 A1

# FIG. 4

EP 4 603 896 A1

FIG. 5

(A)

REFRACTIVE INDEX

$n0 + \Delta n$

$n0$

POSITION

L

(B)

36a1

40a1

40a1

40a1

40a1

22 (24)

20a

23a1

23a (25a)

23a2

$n0$

$n1$

$n2 (> n1)$

$\theta 1$

$\theta 2$

t0

t1

t2

CROSS-SECTIONAL VIEW TAKEN ALONG LINE V-V

FIG. 6

FIG.7

FIG. 8

# FIG. 9

EP 4 603 896 A1

FIG. 10

50

5a

3

5b

52

51

1a

10

8b

8a

9

8c

7a

7b

6a

6b

# FIG. 11

55

**OPTICAL TRANSMISSION APPARATUS**

56

MODULATED
LIGHT ← | LIGHT SOURCE | → | OPTICAL MODULATOR | 2

57

| MODULATOR DRIVE UNIT |

58

| MODULATION SIGNAL GENERATION PART | ← TRANSMISSION DATA

# FIG. 12

60

55

| OPTICAL TRANSMISSION APPARATUS | —— 61 —— | OPTICAL RECEPTION APPARATUS | 62

# FIG. 13

RELATED ART

# FIG. 14

RELATED ART

CROSS-SECTIONAL VIEW TAKEN ALONG LINE XIV-XIV

# FIG. 15

EP 4 603 896 A1

RELATED ART

## CROSS-SECTIONAL VIEW TAKEN ALONG LINE XV-XV

## EUROPEAN SEARCH REPORT

Application Number

EP 24 20 3497

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/390777 A1 (KHAREL PRASHANTA [US] ET AL) 8 December 2022 (2022-12-08) * paragraphs [0066], [0079], [0080], [0134]; figures 1,2,13,14 * | 1-11 | INV. G02F1/035 G02F1/225 |
| A | US 2012/251032 A1 (KATO TOMOAKI [JP]) 4 October 2012 (2012-10-04) * the whole document * | 1-11 | |
| A | US 2014/355926 A1 (VELTHAUS KARL-OTTO [DE]) 4 December 2014 (2014-12-04) * the whole document * | 1-11 | |
| A | US 9 746 742 B2 (PHOTONIC SYSTEMS INC [US]) 29 August 2017 (2017-08-29) * the whole document * | 1-11 | |
| A | US 2020/341345 A1 (KONO NAOYA [JP]) 29 October 2020 (2020-10-29) * the whole document * | 1-11 | |
| A | US 6 310 700 B1 (BETTS GARY E [US]) 30 October 2001 (2001-10-30) * the whole document * | 1-11 | TECHNICAL FIELDS SEARCHED (IPC) G02F |

The present search report has been drawn up for all claims

| Place of search | Date of completion of the search | Examiner |
|---|---|---|
| The Hague | 14 March 2025 | Aichmayr, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3497

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | | | Publication date | Patent family member(s) | | Publication date |
|---|---|---|---|---|---|---|
| US 2022390777 | A1 | | 08-12-2022 | CN 114981694 A | | 30-08-2022 |
| | | | | EP 4066027 A1 | | 05-10-2022 |
| | | | | JP 2023504784 A | | 07-02-2023 |
| | | | | JP 2025027145 A | | 26-02-2025 |
| | | | | US 2021157177 A1 | | 27-05-2021 |
| | | | | US 2022390777 A1 | | 08-12-2022 |
| | | | | WO 2021108323 A1 | | 03-06-2021 |
| US 2012251032 | A1 | | 04-10-2012 | CN 102648434 A | | 22-08-2012 |
| | | | | EP 2487524 A1 | | 15-08-2012 |
| | | | | JP 5729303 B2 | | 03-06-2015 |
| | | | | JP WO2011043079 A1 | | 04-03-2013 |
| | | | | US 2012251032 A1 | | 04-10-2012 |
| | | | | WO 2011043079 A1 | | 14-04-2011 |
| US 2014355926 | A1 | | 04-12-2014 | EP 2615490 A1 | | 17-07-2013 |
| | | | | EP 3079007 A1 | | 12-10-2016 |
| | | | | US 2014355926 A1 | | 04-12-2014 |
| | | | | WO 2013104716 A1 | | 18-07-2013 |
| US 9746742 | B2 | | 29-08-2017 | NONE | | |
| US 2020341345 | A1 | | 29-10-2020 | CN 111856835 A | | 30-10-2020 |
| | | | | JP 2020181173 A | | 05-11-2020 |
| | | | | US 2020341345 A1 | | 29-10-2020 |
| US 6310700 | B1 | | 30-10-2001 | CA 2422287 A1 | | 21-03-2002 |
| | | | | EP 1322993 A1 | | 02-07-2003 |
| | | | | JP 2005506554 A | | 03-03-2005 |
| | | | | US 6310700 B1 | | 30-10-2001 |
| | | | | WO 0223262 A1 | | 21-03-2002 |

EPO FORM P0459

For more details about this annex : see Official Journal of the European Patent Office, No. 12/82

**EP 4 603 896 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022148652 A
- JP 2016194544 A
- JP 2020181173 A